# FASCICULE DE BREVET EUROPEEN

(11) **EP 1 049 592 B1**
(45) Date de publication et mention de la délivrance du brevet: **29.05.2002**
(21) Numéro de dépôt: 99903684.1
(22) Date de dépôt: 27.01.1999
(51) Int. Cl.: B60C 23/06, B60C 23/04

(54) **INSERT DE SECURITE AVERTISSEUR**
SICHERHEITSEINLAGE MIT WARNFUNKTION
ALARM SAFETY INSERT

(30) Priorité: 30.01.1998 FR 9801386; 15.04.1998 FR 9804941
(43) Date de publication de la demande: 08.11.2000
(73) Titulaire: Compagnie Générale des Etablissements MICHELIN-MICHELIN & CIE, 63040 Clermont-Ferrand Cedex 09 (FR)
(72) Inventeur: DUFOURNIER, Arnaud, F-63100 Clermont-Ferrand (FR)
(74) Mandataire: Dequire, Philippe Jean-Marie Denis
(86) Numéro de dépôt international: EP9900525
(87) Numéro de publication internationale: WO9938715

(56) Documents cités:
- EP-A- 0 018 831
- GB-A- 2 032 856
- US-A- 4 262 724

## Description

L'invention concerne l'utilisation des pneumatiques équipés d'un insert de sécurité et plus particulièrement, la détection de la mise en appui du pneumatique sur l'insert de sécurité. Elle propose un insert qui avertit le conducteur dès que le pneumatique est en appui sur lui après crevaison ou en cas de perte de pression importante.

Ces inserts de sécurité sont, en général, montés sur la jante à l'intérieur du pneumatique. Leur fonction est de reprendre la charge en cas de défaillance du pneumatique.

La mise en appui du pneumatique sur l'insert de sécurité s'accompagne d'une dégradation plus ou moins marquée de ses performances qui peut ne pas être perceptible par le conducteur à travers le comportement et le confort du véhicule. De plus, la durée de vie en fonctionnement de ces inserts est limitée. Il est donc essentiel, pour sa sécurité, que le conducteur soit averti dès qu'un pneumatique est en appui sur son insert de sécurité, pour qu'il puisse se conformer aux instructions de leur fabricant.

Plusieurs inserts de sécurité incorporant des moyens pour avertir le conducteur de la mise en appui ont déjà été proposés.

Le brevet US 4 262 724, correspondant au préambule des revendications 1 et 7, propose notamment un insert de sécurité destiné à être monté dans un ensemble comprenant un pneumatique et une jante et radialement extérieurement relativement à la jante. Cet insert a une surface radialement extérieure qui définit un appui radial pour le sommet du pneumatique lorsque le pneumatique est dégonflé ainsi que des moyens pour générer des signaux vibratoires avertisseurs lors d'un roulage en appui. Ces moyens sont une variation du rayon de roulement sous appui de l'insert entre un rayon minimum et un rayon maximum ou une ou plusieurs bosses.

Ces solutions posent plusieurs problèmes. Pour pouvoir être détectés par le conducteur, l'amplitude des variations doit être élevée et cela occasionne un inconfort marqué pour les passagers du véhicule, au moins à certaines vitesses. D'autre part, cela peut dégrader fortement le comportement de l'ensemble pneumatique et jante concerné particulièrement en accélération et au freinage. On ne peut ainsi qu'éviter l'immobilisation instantanée du véhicule en cas de défaillance du pneumatique. En revanche, lorsque l'on souhaite utiliser le véhicule, même à vitesse limitée, sur de longues distances, l'avertissement transmis par l'insert doit être compatible avec la sécurité de conduite, non pénalisant pour la mécanique, tout en restant parfaitement remarquable, directement ou par l'intermédiaire d'un dispositif de détection adapté, par le conducteur.

D'autre part, la demande de brevet WO 94/03338 propose un dispositif de détection de la mise en appui d'un pneumatique sur un insert de sécurité. Ce dispositif comprend un accéléromètre par roue, placé sur l'un des éléments de suspension de la roue et mesurant les accélérations verticales. Les accéléromètres sont reliés à une unité centrale de traitement. L'analyse est basée sur la détection de l'apparition lors de la mise en appui d'un mode de résonance caractéristique du roulage en appui.

L'invention a pour objet un insert de sécurité qui avertit le conducteur, directement ou non, dès la mise en appui du pneumatique dans une très large gamme de vitesses du véhicule tout en conservant un caractère supportable à la fois pour le conducteur et la mécanique, dans la gamme des vitesses autorisées.

Dans ce qui suit, on entend par "véhicule" une unité roulante autonome, véhicule de tourisme, tracteur ou remorque poids lourd, caravane, motocyclette...

Un premier insert de sécurité selon l'invention, destiné à être monté dans un ensemble comprenant un pneumatique et une jante d'un véhicule et radialement extérieurement relativement à la jante, a une surface d'appui radialement extérieure qui définit un appui radial pour le sommet du pneumatique lorsque ledit pneumatique est dégonflé et des moyens pour générer des signaux vibratoires avertisseurs lors d'un roulage en appui. Cet insert est caractérisé en ce que lesdits moyens sont une variation d'une caractéristique M choisie dans le groupe du rayon extérieur et de la raideur radiale dudit insert en fonction de l'azimut α qui présente au moins quatre maxima répartis en au moins deux fois deux valeurs M1 et M2 différentes.

Dans son mode de réalisation le plus simple, la caractéristique M présente en fonction de l'azimut α deux maxima M1 diamétralement opposés et deux maxima M2 diamétralement opposés et disposés à 90° des maxima M1.

Un tel insert a l'avantage de procurer lors d'un roulage en appui une excitation vibratoire avertisseur répartie principalement sur les harmoniques 2 et 4 du tour de roue, tout en évitant la fréquence du tour de roue. Cela facilite la détection de ces signaux directement par le conducteur parce que l'excitation de deux harmoniques, au lieu d'une seule, augmente la gamme de vitesses dans lesquelles les vibrations sont perceptibles. Un autre avantage est d'éviter les confusions toujours possible avec, notamment, les vibrations du régime du moteur lorsque l'insert procure principalement une fréquence unique d'excitation. De plus, lorsque le véhicule est équipé d'un dispositif de détection par exemple décrit dans la demande WO 94/03338, les pics des signaux vibratoires avertisseurs sont très aisément perceptibles avec très peu de risques de fausses alarmes.

Selon un autre mode de réalisation, la caractéristique M présente en fonction de l'azimut α deux maxima M1 diamétralement opposés et trois maxima M2 répartis sur la circonférence et décalés relativement aux maxima M1.

Un tel insert va procurer lors d'un roulage sur appui une excitation vibratoire avertisseur répartie principalement sur les harmoniques 2 et 3 du tour de roue, ainsi que par combinaison sur l'harmonique 5.

Selon un troisième mode de réalisation, la caractéristique M présente en fonction de l'azimut α deux maxima M1 diamétralement opposés et quatre maxima M2 disposés à 90° les uns des autres et décalés de 45° par rapport aux maxima M1.

Cet insert va procurer lors d'un roulage sur appui une excitation vibratoire avertisseur répartie selon les harmoniques 2, 4, mais aussi 8. Cela a l'avantage d'une détection plus aisée à basse vitesse.

De préférence, de part et d'autre de chaque maximum M1 ou M2, se trouve un minimum de valeur unique M3, cela augmente la concentration d'énergie effectivement comprise dans les harmoniques principalement excitées.

Les moyens avertisseurs peuvent aussi comporter, en combinaison avec la première variation, une variation en fonction de l'azimut α de la seconde caractéristique du groupe du rayon extérieur et de la raideur radiale dudit insert.

Selon un autre mode de réalisation de l'invention, les moyens sont une combinaison d'une variation du rayon extérieur et d'une variation de la raideur radiale de l'insert en fonction de l'azimut α, de telle sorte que l'insert sous charge présente un rayon écrasé en fonction de l'azimut α comportant au moins quatre maxima.

Les variations de raideur radiale en fonction de l'azimut α peuvent être comprises entre 10 et 1000 %, et les variations de rayon extérieur entre 0,1 et 7 mm.

Préférentiellement, la variation de raideur radiale de l'insert de sécurité selon l'invention est fonction de l'amplitude de la sollicitation radiale à laquelle est soumis l'appui. Par exemple, au delà d'un seuil de sollicitation radiale donné, la variation de raideur radiale en fonction de l'azimut α augmente très fortement.

Un tel insert peut comprendre une base sensiblement cylindrique destinée à s'adapter autour de la jante, un sommet sensiblement cylindrique destiné à entrer en contact avec le pneumatique en cas de perte de pression, et des parois reliant sensiblement radialement la base et le sommet. Il peut être réalisé en matériau élastomérique souple et avoir des parois arquées. Les variations de raideur radiale sont alors obtenues aisément en faisant varier l'épaisseur des parois et les variations de rayon extérieur préférentiellement en faisant varier les longueurs des parois.

Dans un mode de réalisation particulier, les variations de rigidité radiale et/ou de rayon extérieur de l'insert ne s'appliquent axialement que sur une partie de l'insert destinée à être placée vers l'intérieur du véhicule. Cela a l'avantage de créer lors d'un roulage en appui des couples avertisseurs donc des signaux orientés à la fois radialement et transversalement ce qui peut faciliter leur détection. Un autre avantage est que de tels inserts ne transmettent principalement des signaux vibratoires avertisseurs que lors d'un roulage en ligne droite alors qu'en virage, les pneumatiques ayant un angle de carrossage important, c'est la partie uniforme, « inactive» de l'insert qui supporte principalement la charge. Les risques de perturbation du comportement du véhicule sont ainsi réduits.

Enfin, les variations de rigidité radiale et/ou de rayon extérieur de l'insert peuvent présenter une évolution axiale complémentaire en fonction de l'azimut α. Une telle évolution a l'avantage de créer une vibration complémentaire des précédentes dont une composante est orientée dans la direction axiale.

Plusieurs modes de réalisation de l'invention sont maintenant décrits à l'aide du dessin annexé dans lequel :
- la figure 1 présente, en coupe méridienne, un ensemble pneumatique et jante équipé d'un insert de sécurité ;
- la figure 2a présente une vue partielle de côté d'un insert en matériau élastomérique et la figure 2b une coupe d'un même insert ;
- la figure 3 présente, en coupe méridienne, un schéma d'insert avec une variation de rayon extérieur ;
- la figure 4 présente, en coupe méridienne, un schéma d'un second insert avec une variation de raideur radiale ;
- la figure 5 présente, en coupe méridienne, un schéma d'un troisième insert avec une combinaison de variations de raideur radiale et de rayon extérieur ;
- la figure 6 présente, en vue partielle de côté, une variante de l'insert de la figure 5.

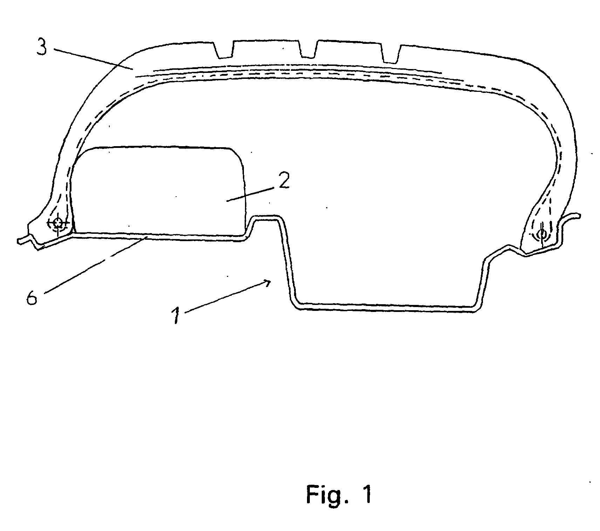

On voit à la figure 1 une jante 1 de roue équipée d'un insert annulaire de sécurité 2 reposant sur la portée 6 de la jante 1. La géométrie particulière de cette jante 1 de roue est notamment décrite dans la demande de brevet français FR 2 713 558. Elle présente deux sièges de bourrelets de diamètres différents et est particulièrement adaptée pour la mise en place aisée de cet insert de sécurité 2. Cet ensemble permet le roulage malgré une baisse de pression importante dans le pneumatique 3. Dans le cas d'un tel roulage, l'intérieur du pneu déformé frotte sur la surface extérieure de l'insert provoquant un échauffement qui limite le rayon d'action disponible : il importe donc que le conducteur soit informé dès la mise en appui d'un pneumatique sur son insert 2.

A cet effet, on utilise avantageusement comme insert un insert de sécurité selon l'invention comportant des moyens pour générer des signaux vibratoires avertisseurs harmoniques du tour de roue (c'est-à-dire de la fréquence de rotation du pneumatique).

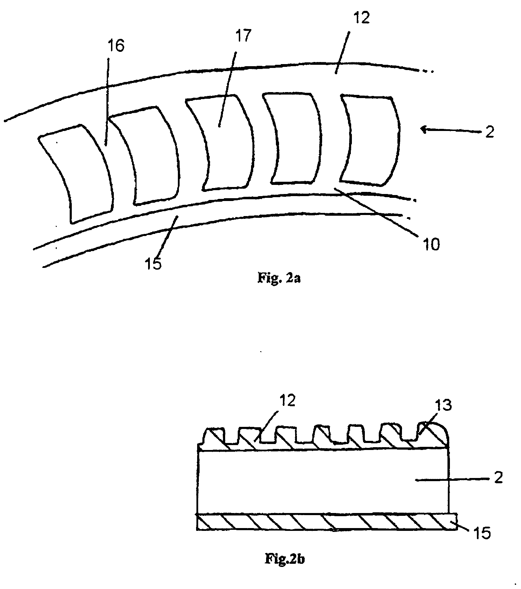

L'insert présenté à la figure 2 est réalisé en matériau élastomérique souple. Il comprend une base 10, de forme généralement annulaire et renforcée par une nappe (non représentée) orientée longitudinalement sensiblement à 0°, un sommet 12, sensiblement annulaire, avec sur sa paroi radialement extérieure des rainures longitudinales 13 et des parois 16 arquées. Entre les parois 16 se trouvent des évidements 17 qui, comme le montre la figure 2b traversent complètement axialement l'insert 2. La base peut comporter une butée 15 à disposer du côté extérieur à proximité du bourrelet du pneumatique.

Un tel insert 2 peut très aisément voir sa raideur radiale modifiée par élargissement local des parois 16. Son rayon extérieur peut être aussi modifié par augmentation locale de l'épaisseur de la base 10 ou du sommet 12 et préférentiellement par allongement radial des parois 16, ce qui n'augmente que très peu le poids de l'insert. En fonction de l'utilisation de l'insert, en coopération ou non avec un dispositif de détection, et du type de véhicule équipé, les amplitudes des variations de rayon extérieur et de raideur radiale peuvent varier très fortement : entre 0,1 et 7 mm pour le rayon extérieur et préférentiellement entre 1 et 3 mm, et de 10 à 1000 % pour la rigidité radiale.

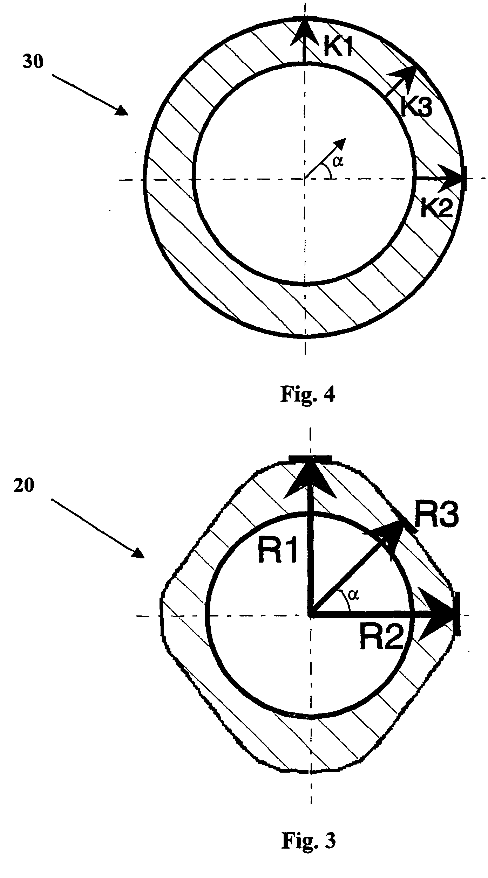

La figure 3 présente un schéma d'insert 20 selon l'invention qui a une variation de rayon extérieur entre trois valeurs R1, R2 et R3 telles que R1>R2>R3 avec une variation progressive de ce rayon entre les maxima et les minima. Les deux zones de rayons extérieurs R1 sont à 180° l'une de l'autre et les deux zones de rayons R2 aussi ; les quatre minima de rayons R3 se trouvent chacun entre deux maxima R1 et R2. Il en résulte, lors d'un roulage en appui, une variation du rayon écrasé en fonction de l'azimut α avec deux harmoniques principales, la première de fréquence 2, due aux deux premiers maxima de rayon R1 et la seconde de fréquence 4 due à la présence des 4 maxima de rayons R1 et R2 et des quatre minima de rayon R3. Dans cet exemple, la différence R1 - R3 est égale à 5 mm et la différence R2 - R1 est égale à 3 mm.

La figure 4 présente un schéma d'insert 30 selon l'invention qui a une variation de raideur radiale entre trois valeurs K1, K2 et K3 telles que K1>K2>K3 avec une variation progressive de cette raideur entre les maxima et les minima. Comme précédemment, les deux zones de raideurs K1 sont à 180° l'une de l'autre et les deux zones de raideur K2 aussi ; les quatre minima de raideurs K3 se trouvent chacun entre deux maxima K1 et K2. Il en résulte, lors d'un roulage en appui, une variation de cette raideur en fonction de α avec deux harmoniques principales, la première de fréquence 2, due aux deux premiers maxima de raideur K1 et la seconde de fréquence 4 due à la présence des 4 maxima de raideurs K1 et K2 et des quatre minima de raideur K3.

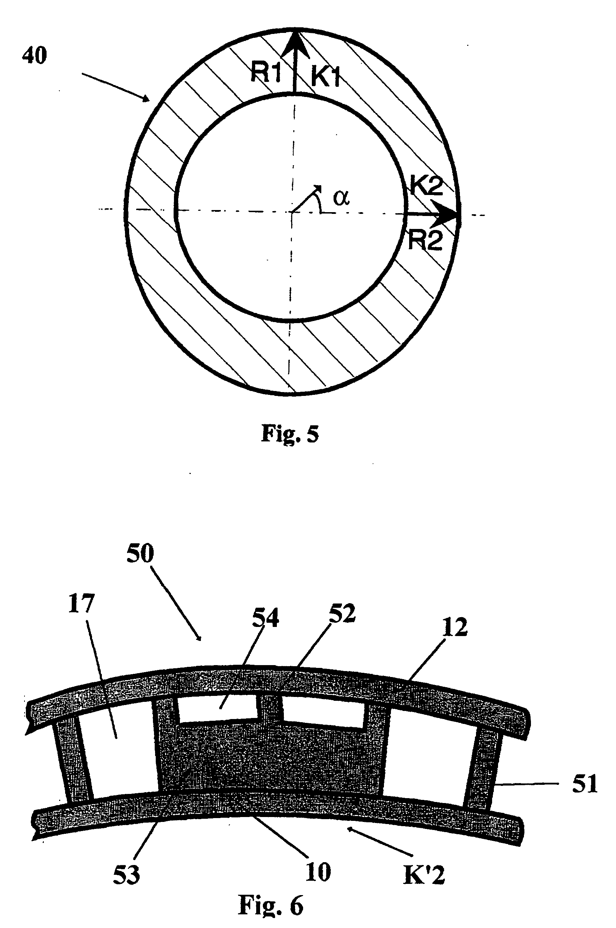

La figure 5 présente un schéma d'insert 40 selon l'invention qui présente une combinaison d'une variation de rayon extérieur et d'une variation de raideur radiale. Chaque caractéristique présente deux maxima (respectivement R1, K2) et deux minima (respectivement R2, K1). Les deux maxima de rayon R1 sont décalés angulairement de 180° entre eux et sont disposés à 90° des deux minima R2. De même les deux maxima de raideur K2 sont décalés angulairement de 180° entre eux et sont disposés à 90° des deux minima K1. Enfin chaque maximum de rayon R1 est décalé angulairement de 90° relativement aux deux maxima de raideur K2. Les maxima de raideur radiale sont suffisamment localisés pour procurer à l'ensemble de l'insert 40 une variation du rayon écrasé en appui comportant quatre maxima.

En conséquence, cet insert procure aussi une excitation harmonique concentrée sur les harmoniques 2 et 4 mais présente l'avantage d'avoir une pondération variable en fonction de la vitesse. La demanderesse a en effet constaté que les variations radiales de raideur étaient plus perceptibles à basse vitesse et que les variations de rayon extérieur étaient elles plus perceptibles à haute vitesse. Cela augmente la plage effective des vitesses d'utilisation de l'insert.

La figure 6 présente, en vue partielle de côté, un insert 50. Cet insert combine comme l'insert 40 précédent une combinaison d'une variation de rayon extérieur et d'une variation de raideur radiale en fonction de l'azimut α. Il a la particularité d'avoir une variation de raideur radiale en fonction de l'azimut α fonction de la sollicitation radiale que subit l'insert. A cet effet, les deux maxima de raideur K'2(Q) ont une raideur radiale fonction de la charge ou sollicitation radiale Q que subit l'insert.

L'insert représenté à la figure 6 est une variante aussi de l'insert représenté à la figure 2. Il comprend des parois 51 droites. Dans la zone de raideur maximale K'2 représentée, la base 10 se prolonge radialement extérieurement par un bloc en caoutchouc 53. L'épaisseur radiale de ce bloc 53 est supérieure à la moitié de la hauteur radiale des parois 51 reliant la base 10 au sommet 12. En conséquence, la paroi 52 reliant le bloc 53 au sommet 12 a une hauteur radiale très faible et les évidements 54 disposés entre le bloc 53, le sommet 12 et la parois 51 et 52 ont un volume inférieur de plus de la moitié du volume des évidements 17.

Il en résulte que lorsqu'une charge Q est appliquée sur cette zone de raideur maximale K'2 en fonction de l'azimut α, la paroi 52 s'écrase avec une première raideur donnée. Puis, lorsque le sommet 12 vient en contact avec le bloc 53, la raideur de cette zone K'2 augmente très fortement. En conséquence, aux faibles charges Q, l'amplitude de la variation de raideur radiale en fonction de l'azimut est comparable à celle de l'insert 40 de la figure 5, en revanche, lorsque la charge Q dépasse un seuil donné, cette amplitude de variation augmente très fortement. La demanderesse a observé que cette combinaison permettait d'obtenir un excellent compromis pour l'efficacité de l'excitation produite par l'insert. Lors d'un roulage sur bons sols, la faible variation de raideur radiale ne pénalise pas le confort. Et, lors d'un roulage sur mauvais sols, la forte variation de raideur radiale permet de conserver une bonne excitation lors d'un roulage sur appui.

On peut aisément, sans sortir du cadre de cette invention, définir des inserts similaires à ceux qui viennent d'être décrits adaptés pour concentrer les énergies de leurs signaux avertisseurs sur des fréquences harmoniques plus élevées.

## Revendications

1. Insert de sécurité destiné à être monté dans un ensemble comprenant un pneumatique et une jante d'un véhicule et radialement extérieurement relativement à la jante, ledit insert ayant une surface d'appui radialement extérieure qui définit un appui radial pour le sommet du pneumatique lorsque ledit pneumatique est dégonflé et des moyens pour générer des signaux vibratoires avertisseurs lors d'un roulage en appui, **caractérisé en ce que** lesdits moyens sont une variation d'une caractéristique M choisie dans le groupe du rayon extérieur et de la raideur radiale dudit insert en fonction de l'azimut α qui présente au moins quatre maxima répartis en au moins deux fois deux valeurs M1 et M2 différentes.

2. Insert de sécurité selon la revendication 1, dans lequel la caractéristique M présente en fonction de l'azimut α deux maxima M1 diamétralement opposés et deux maxima M2 diamétralement opposés et disposés à 90° des maxima M1.

3. Insert de sécurité selon la revendication 1, dans lequel la caractéristique M présente en fonction de l'azimut α deux maxima M1 diamétralement opposés et trois maxima M2 répartis sur la circonférence et décalés relativement aux maxima M1.

4. Insert de sécurité selon la revendication 1, dans lequel la caractéristique M présente en fonction de l'azimut α deux maxima M1 diamétralement opposés et quatre maxima M2 disposés à 90° les uns des autres et décalés de 45° par rapport aux maxima M1.

5. Insert de sécurité selon l'une des revendications 1 à 4, dans lequel de part et d'autre de chaque maximum M1 ou M2 se trouve un minima de valeur unique M3.

6. Insert de sécurité selon l'une des revendications 1 à 5, dans lequel lesdits moyens comportent, en combinaison avec la première variation, une variation en fonction de l'azimut de la seconde caractéristique du groupe du rayon extérieur et de la raideur radiale dudit insert.

7. Insert de sécurité destiné à être monté dans un ensemble comprenant un pneumatique et une jante d'un véhicule et radialement extérieurement relativement à la jante, ledit insert ayant une surface d'appui radialement extérieure qui définit un appui radial pour le sommet du pneumatique lorsque ledit pneumatique est dégonflé et des moyens pour générer des signaux vibratoires avertisseurs lors d'un roulage en appui, **caractérisé en ce que** lesdits moyens sont une combinaison d'une variation du rayon extérieur et d'une variation de la raideur radiale dudit insert en fonction de l'azimut α, de telle sorte que l'insert sous charge présente un rayon écrasé en fonction de l'azimut α comportant au moins quatre maxima.

8. Insert de sécurité selon l'une des revendications 1 à 7, dans lequel la variation de raideur radiale en fonction de l'azimut α est comprise entre 10 et 1000 %.

9. Insert de sécurité selon l'une des revendications 1 à 8, dans lequel la variation de raideur radiale en fonction de l'azimut α est fonction de l'amplitude de la sollicitation radiale à laquelle est soumis l'appui.

10. Insert de sécurité selon la revendication 9, dans lequel, au delà d'un seuil de sollicitation radiale donné, la variation de raideur radiale en fonction de l'azimut α augmente très fortement.

11. Insert de sécurité selon l'une des revendications 1 à 10, dans lequel la variation de rayon extérieur en fonction de l'azimut α est comprise entre 0,1 et 7 mm.

12. Insert de sécurité selon l'une des revendications 1 à 11, comprenant une base sensiblement cylindrique destinée à s'adapter autour de la jante, un sommet sensiblement cylindrique destiné à entrer en contact avec le pneumatique en cas de perte de pression, et des parois reliant sensiblement radialement la base et le sommet.

13. Insert de sécurité selon la revendication 12, réalisé en matériau élastomérique souple, avec des parois arquées.

14. Insert de sécurité selon l'une des revendications 12 ou 13, dans lequel les variations radiales de raideur sont obtenues en faisant varier l'épaisseur des parois.

15. Insert de sécurité selon l'une des revendications 12 ou 13, dans lequel les variations radiales de raideur sont obtenues en faisant varier la forme des parois.

16. Insert de sécurité selon l'une des revendications 12 à 15, dans lequel les variations de rayon extérieur sont obtenues préférentiellement en faisant varier la longueur des parois.

17. Insert de sécurité selon l'une des revendications 1 à 16, dans lequel les variations de rigidité radiale et/ou de rayon extérieur de l'insert ne s'appliquent axialement que sur une partie de l'insert destinée à être placée vers l'intérieur du véhicule.

18. Insert de sécurité selon l'une des revendications 1 à 17, dans lequel les variations de rigidité radiale et/ou de rayon extérieur de l'insert présentent une évolution axiale complémentaire en fonction de l'azimut α.

## Patentansprüche

1. Sicherheitseinlage, die zur Montage in einer Baugruppe, die einen Reifen und eine Felge eines Fahrzeugs aufweist, sowie radial bezüglich der Felge außen bestimmt ist, wobei die genannte Einlage eine radial außenliegende Auflagefläche aufweist, die eine radiale Auflage für den Scheitel des Reifens, wenn der genannte Reifen Druck verliert, sowie Mittel zum Erzeugen von warnenden Schwingungssignalen während der Fahrt unter Auflage bildet, **dadurch gekennzeichnet, daß** die genannten Mittel eine Veränderung einer Charakteristik M sind, die in der Gruppe des äußeren Radius und der radialen Steifigkeit der genannten Einlage in Funktion des Azimuts α gewählt ist, mit mindestens vier Maxima, die auf zweimal zwei unterschiedliche Werte M1 und M2 verteilt sind.

2. Sicherheitseinlage nach Anspruch 1, worin die Charakteristik M in Funktion des Azimuts α zwei diametral gegenüberliegende Maxima M1 und zwei diametral gegenüberliegende Maxima M2 darbietet, die gegenüber den Maxima M1 unter 90° angeordnet sind.

3. Sicherheitseinlage nach Anspruch 1, worin die Charakteristik M in Funktion des Azimuts α zwei diametral gegenüberliegende Maxima M1 und drei Maxima M2 darbietet, die über den Umfang verteilt und gegenüber den Maxima M1 versetzt sind.

4. Sicherheitseinlage nach Anspruch 1, worin die Charakteristik M in Funktion des Azimuts α zwei diametral gegenüberliegende Maxima M1 und vier Maxima M2 darbietet, die zueinander unter 90° angeordnet und bezüglich der Maxima M1 um 45° versetzt sind.

5. Sicherheitseinlage nach einem der Ansprüche 1 bis 4, worin sich beiderseits eines jeden Maximum M1 oder M2 ein Minimum mit einem einzigen Wert M3 befindet.

6. Sicherheitseinlage nach einem der Ansprüche 1 bis 5, worin die genannten Mittel in Kombination mit der ersten Veränderung eine Veränderung in Funktion des Azimuts der zweiten Charakteristik der Gruppe des äußeren Radius und der radialen Steifigkeit der genannten Einlage aufweisen.

7. Sicherheitseinlage, die zur Montage in einer Baugruppe, die einen Reifen und eine Felge eines Fahrzeugs aufweist, sowie radial bezüglich der Felge außen bestimmt ist, wobei die genannte Einlage eine radial außenliegende Auflagefläche aufweist, die eine radiale Auflage für den Scheitel des Reifens, wenn der genannte Reifen Druck verliert, sowie Mittel zum Erzeugen von warnenden Schwingungssignalen während der Fahrt unter Auflage bildet, **dadurch gekennzeichnet, daß** die genannten Mittel eine Kombination aus einer Veränderung des äußeren Radius und einer Veränderung der radialen Steifigkeit der genannten Einlage in Funktion des Azimuts α sind, und zwar derart, daß die Einlage unter Last einen zusammengedrückten Radius in Funktion des Azimuts α aufweist, mit mindestens vier Maxima.

8. Sicherheitseinlage nach einem der Ansprüche 1 bis 7, worin die Veränderung der radialen Steifigkeit in Funktion vom Azimut α zwischen 10 und 1000 % liegt.

9. Sicherheitseinlage nach einem der Ansprüche 1 bis 8, worin die Veränderung der radialen Steifigkeit in Funktion vom Azimut α eine Funktion der radialen Belastung ist, der die Auflage unterzogen ist.

10. Sicherheitseinlage nach Anspruch 9, worin jenseits einer gegebenen, radialen Belastungsschwelle die Veränderung der radialen Steifigkeit in Funktion des Azimuts α sehr stark zunimmt.

11. Sicherheitseinlage nach einem der Ansprüche 1 bis 10, worin die Veränderung des äußeren Radius in Funktion des Azimuts α zwischen 0,1 und 7 mm liegt.

12. Sicherheitseinlage nach einem der Ansprüche 1 bis 11, mit einer im wesentlichen zylindrischen Basis, die dazu bestimmt ist, sich rund um die Felge anzulegen, einem im wesentlichen zylindrischen Scheitel, der dazu bestimmt ist, im Falle eines Druckverlustes in Berührung mit dem Reifen zu treten, und Wänden, die die Basis und den Scheitel im wesentlichen radial verbinden.

13. Sicherheitseinlage nach Anspruch 12, hergestellt aus weichem Elastomermaterial, mit bogenförmigen Wänden.

14. Sicherheitseinlage nach einem der Ansprüche 12 oder 13, worin die radialen Veränderungen der Steifigkeit erhalten werden, indem man die Dicke der Wände sich ändern läßt.

15. Sicherheitseinlage nach einem der Ansprüche 12 oder 13, worin die radialen Veränderungen der Steifigkeit erhalten werden, indem man die Form der Wände sich ändern läßt.

16. Sicherheitseinlage nach einem der Ansprüche 12 bis 15, worin die Veränderungen des äußeren Radius bevorzugt erhalten werden, indem man die Länge der Wände sich ändern läßt.

17. Sicherheitseinlage nach einem der Ansprüche 1 bis 16, worin die Veränderungen der radialen Steifigkeit und/oder des äußeren Radius der Einlage sich axial nur über einen Teil der Einlage erstrecken, der dazu bestimmt ist, zum Inneren des Fahrzeugs hin angeordnet zu werden.

18. Sicherheitseinlage nach einem der Ansprüche 1 bis 17, worin die Veränderungen der radialen Steifigkeit und/oder des äußeren Radius der Einlage eine axiale Entwicklung darbieten, die komplementär ist zur Funktion des Azimuts α.

## Claims

1. A safety insert intended to be mounted in an assembly comprising a tyre and a rim of a vehicle and radially outward from the rim, said insert having a radially outer bearing surface which defines a radial support for the crown of the tyre when said tyre is deflated and means for generating vibrating warning signals on a run-flat condition, **characterised in that** said means are a variation in a characteristic M chosen from the group of external radius and radial stiffness of said insert as a function of the azimuth α, which has at least four maxima distributed in at least twice two different values M1 and M2.

2. A safety insert according to Claim 1, in which the characteristic M has as a function of the azimuth α two diametrically opposed maxima M1 and diametrically opposed two maxima M2 placed at 90° from the maxima M1.

3. A safety insert according to Claim 1, in which the characteristic M has as a function of the azimuth α two diametrically opposed maxima M1 and three maxima M2 distributed over the circumference and offset from the maxima M1.

4. A safety insert according to Claim 1, in which the characteristic M has as a function of the azimuth α two diametrically opposed maxima M1 and four maxima M2 placed at 90° from one another and offset by 45° from the maxima M1.

5. A safety insert according to one of Claims 1 to 4, in which on both sides of each maximum M1 or M2 there is a single value minimum M3.

6. A safety insert according to one of Claims 1 to 5, in which said means comprise, in combination with the first variation, a variation as a function of the azimuth of the second characteristic of the group of the external radius and radial stiffness of said insert.

7. A safety insert intended to be mounted in an assembly comprising a tyre and a rim of a vehicle and radially outward from the rim, said insert having a radially outer bearing surface which defines a radial support for the crown of the tyre when said tyre is deflated and means for generating vibrating warning signals on a run-flat condition, **characterised in that** said means are a combination of a variation in the external radius and a variation in the radial stiffness of said insert as a function of the azimuth α, so that the insert under load has a loaded radius as a function of the azimuth α comprising at least four maxima.

8. A safety insert according to one of Claims 1 to 7, in which the variation in radial stiffness as a function of the azimuth α ranges between 10 and 1000%.

9. A safety insert according to one of Claims 1 to 8, in which the variation in radial stiffness as a function of the azimuth α depends on the amplitude of the radial stress to which the support is subjected.

10. A safety insert according to Claim 9, in which, beyond a given threshold of radial stress, the variation in radial stiffness as a function of the azimuth α increases very markedly.

11. A safety insert according to one of Claims 1 to 10, in which the variation in external radius as a function of the azimuth α ranges between 0.1 and 7 mm.

12. A safety insert according to one of Claims 1 to 11, comprising a substantially cylindrical base intended to be fitted around the rim, a substantially cylindrical crown intended to come into contact with the tyre in the event of a pressure loss and walls connecting the base and the crown substantially radially.

13. A safety insert according to Claim 12, made of flexible elastomeric material, with arcuate walls.

14. A safety insert according to one of Claims 12 or 13, in which the radial variations in stiffness are obtained by varying the thickness of the walls.

15. A safety insert according to one of Claims 12 or 13, in which the radial variations in stiffness are obtained by varying the shape of the walls.

16. A safety insert according to one of Claims 12 to 15, in which the variations in external radius are preferably obtained by varying the length of the walls.

17. A safety insert according to one of Claims 1 to 16, in which the variations in radial rigidity and/or external radius of the insert are applied axially only on a part of the insert which is intended to be placed toward the inside of the vehicle.

18. A safety insert according to one of Claims 1 to 17, in which the variations in radial rigidity and/or external radius of the insert have a complementary axial development as a function of the azimuth α.
